# EUROPEAN PATENT APPLICATION

(11) **EP 4 468 223 A1**
(43) Date of publication of application: **27.11.2024**
(21) Application number: 23175425.0
(22) Date of filing: 25.05.2023
(51) Int. Cl.: G06Q 20/10, G06Q 20/14, G06Q 20/38, G06Q 20/40, G06Q 20/42

(54) **SYSTEM AND METHOD FOR AUTHORIZING ELECTRONIC PAYMENTS**

(71) Applicant: EPI Company SE, 1080 Sint-Jans-Molenbeek (BE)
(72) Inventor: NAVARRO PEREZ, Antonio, 90409 NÜRNBERG (DE); WEBER, Timo, 91126 SCHWABACH (DE); MANSFELD, Fabian, 13189 BERLIN (DE)
(74) Representative: Cabinet Beaumont

(57) **Abstract**

The present disclosure relates to a method for performing an account to account payment transaction, the method comprising: generating, by a consumer device an electronic consent token indicating at least the payment amount and/or the payment period, the electronic consent token being cryptographically signed, and transmitting the electronic consent token to the acceptor device (202) via the payment platform (210); initiating one or more account to account payments, by the acceptor device (202) or by an acceptor payment service provider (PSP) server (206), by transmitting a payment request for authorization to a consumer PSP server (208) via the payment platform (210), the payment request for authorization comprising the consent token; and authorizing or not, by the consumer PSP server (208), the payment request for authorization based on the payment amount and/or the payment period indicated by the consent token.

## Description

### Technical field

The present disclosure relates generally to non-card payment methods based on an account number such as an IBAN (International Bank Account Number) or the like, and in particular to non-card payments initiated by or through the payee.

### Background art

In the card payment environment, a payment is initiated by the authentication of the cardholder at the point of sale. An acquirer is used to initiate a payment authorization request, which is sent to the card issuer. The card issuer decides the outcome of the transaction (authorization). The position of the acquirer makes merchant-initiated fraud difficult, since malicious merchants can be locked out of the system at the beginning of the authorization process. Furthermore, the merchant account information is managed by the acquirer, who is also in charge of the settlement of the funds based on the accounts kept in its systems, again making fraud more difficult.

Non-card payments corresponding to rapid bank transfers between accounts provide an alternative to card payments. SEPA (Single Euro Payments Area) is a payment-integration initiative of the European Union aimed at simplifying bank transfers between euro accounts. SEPA transfers are based on IBAN (International Bank Account Number) information identifying the payment service users' accounts. Two SEPA credit transfer schemes are available, known as SCT (SEPA Credit Transfer) and SCT Inst (SEPA Instant Credit Transfer). The SCT payment scheme provides relatively rapid transfers, while SCT Inst provides instant crediting from one account to another, generally in under 10 seconds, or a maximum of 20 seconds in exceptional circumstances.

SEPA Request to Pay (SRTP) is a payment protocol that allows a payee to initiate a payment request towards a payer.

While SRTP promises to provide a rapid non-card payment solution, there are technical challenges in implementing a payment system based on this protocol. Indeed, mechanisms should allow each payment transaction to be authorized by the payer, but this can place a relatively high burden on the payment network infrastructure in terms of energy consumption and processing resources. Furthermore, the payment should be executed in an unambiguous manner so that the parties can rely on the information indicating whether or not the payment has been executed, but current solutions do not adequately address this issue, due at least in part to the fact that SRTP does not cover the payment execution itself, but only the payment request confirmation or rejection. A further drawback of the SRTP solution is that it lacks versatility and cannot, for example, allow certain complex transaction types, in which the confirmation of the payer and the payment(s) themselves are decoupled in time, to be implemented.

There is thus a need for an improved payment method and system for performing non-card payments.

### Summary of Invention

According to one aspect, there is provided a method for performing an account to account payment transaction, the method comprising: receiving, by a payment platform from an acceptor device, a consent request for one or more payments, the consent request indicating at least a payment amount and/or a payment period; requesting, via a consumer device, consumer consent for the one or more payments; in response to consumer consent, generating, by the consumer device an electronic consent token indicating at least the payment amount and/or the payment period, the electronic consent token being cryptographically signed, and transmitting the electronic consent token to the acceptor device via the payment platform; initiating one or more account to account payments, by the acceptor device or by an acceptor payment service provider server, by transmitting a payment request for authorization to a consumer PSP server via the payment platform, the payment request for authorization comprising the consent token; and authorizing or not, by the consumer PSP server, the payment request for authorization based on the payment amount and/or the payment period indicated by the consent token.

According to one embodiment, the consumer PSP server is configured to authorize or not the payment based on: a comparison of the payment amount of the payment request with the payment amount indicated by the consent token; and/or a verification of whether the payment period has expired; and/or a verification of whether the payment can proceed, for example in view of the available funds on the consumer's account.

According to one embodiment, the electronic consent token is stored in a memory of the payment platform.

According to one embodiment, a wallet application of the consumer device, or a remote wallet application accessible by the consumer device, is configured to cryptographically sign the electronic consent token using a private key of a public/private key pair, and wherein the consumer PSP server is configured to verify the signature of the electronic consent token using the public key of the public/private key pair.

According to one embodiment, each of the one or more account to account payments is executed using a two-step method, a first step comprising obtaining, by the acceptor PSP server from the consumer PSP server, a payment authorization response message, which implies a guarantee of the payment from the consumer PSP server, and a second step comprising transmitting, by the acceptor PSP server to the consumer PSP server, in response to the reception of the payment authorization response message, a payment request for capture command, requiring the execution of the payment.

According to one embodiment, the method further comprises requesting the consumer consent for the one or more payments and, prior to generating the electronic consent token, authenticating the consumer via the consumer device.

According to a further aspect, there is provided a payment system for performing an account to account payment transaction, the payment system comprising: a payment platform configured to receive, from an acceptor device, a consent request for one or more payments, the consent request indicating at least a payment amount and/or a payment period; a consumer device configured to obtain consumer consent for the one or more payments, and in response to the consumer consent, to generate an electronic consent token indicating at least the payment amount and/or the payment period, the electronic consent token being cryptographically signed, the consumer device being further configured to transmit the electronic consent token to the acceptor device directly or via the payment platform; and wherein the acceptor device, or an acceptor payment service provider server of the payment system, is further configured to initiate one or more account to account payments, by: transmitting by the acceptor payment service provider server to the payment platform, a payment request for authorization comprising a payment amount and the electronic consent token defining the payment period and/or a payment limit approved by a payer; and transmitting a payment request to a consumer PSP server, the payment request comprising the consent token, wherein the consumer PSP server is configured to authorize or not the payment request based on the payment amount and/or the payment period indicated by the consent token.

According to one embodiment, the consumer PSP server is configured to authorize or not the payment based on: a comparison of the payment amount of the payment request with the payment amount indicated by the consent token; and/or a verification of whether the payment period has expired; and/or a verification of whether the payment can proceed, for example in view of the available funds on the consumer's account.

According to one embodiment, the payment platform comprises a memory storing the electronic consent token.

According to one embodiment, a wallet application of the consumer device, or a remote wallet application accessible by the consumer device, is configured to cryptographically sign the electronic consent token using a private key of a public/private key pair, and wherein the consumer PSP server is configured to verify the signature of the electronic consent token using the public key of the public/private key pair.

According to one embodiment, each of the one or more account to account payments is executed using a two-step method, a first step comprising obtaining, by the acceptor PSP server from the consumer PSP server, a payment authorization response message, which implies a guarantee of the payment from the consumer PSP server, and a second step comprising transmitting, by the acceptor PSP server to the consumer PSP server, in response to the reception of the payment authorization response message, a payment request for capture command, requiring the execution of the payment.

According to one embodiment, the consumer device is further configured to authenticate the consumer after requesting the consumer consent for the one or more payments and prior to generating the electronic consent token.

According to a further aspect, there is provided a method for performing an account to account payment transaction, the method comprising: transmitting by an acceptor payment service provider server to a payment platform, a payment request for authorization comprising a payment amount and an electronic consent token defining a payment period and/or a payment limit approved by a payer; transmitting, by the payment platform to a consumer PSP server, the payment request for authorization; verifying, by the consumer PSP server, whether the payment can be accepted; if it is determined that the payment can be accepted, sending by the consumer PSP server to the payment platform a payment authorization response indicating that the payment can be accepted, which implies a guarantee of the payment from the consumer PSP server; transmitting, by the acceptor PSP server in response to the payment authorization response, a payment request for capture to the consumer PSP server via the payment platform, the payment request for capture requiring the execution of the payment; and responding, by the consumer PSP server, to the payment request for capture confirming that the payment will proceed.

According to one embodiment, the electronic consent token is cryptographically signed, and verifying by the consumer PSP server whether the payment can be accepted comprises verifying the signature of the electronic consent token, and refusing the payment if the signature is invalid.

According to one embodiment, verifying, by the consumer PSP server, whether the payment can be accepted comprises verifying the payment period and/or the payment limit defined by the electronic consent token, and/or verifying that there are sufficient funds on the consumer's account.

According to one embodiment, the electronic consent token is stored in a memory of the payment platform.

According to one embodiment, a wallet application of the consumer device, or a remote wallet application accessible by the consumer device, is configured to cryptographically sign the electronic consent token using a private key of a public/private key pair, and wherein the consumer PSP server is configured to verify the signature of the electronic consent token using the public key of the public/private key pair.

According to a further aspect, there is provided a payment system for processing an account to account payment transaction, the payment system comprising: an acceptor payment service provider server configured to transmit, to a payment platform, a payment request for authorization comprising a payment amount and an electronic consent token defining a payment period and/or a payment limit approved by a payer; the payment platform configured to transmit the payment request for authorization to a consumer PSP server; the consumer PSP server configured to verify whether the payment can be accepted, which implies a guarantee of the payment from the consumer PSP server; wherein, if it is determined that the payment can be accepted, the consumer PSP server is configured to send to the payment platform a payment authorization response indicating that the payment can be accepted; the acceptor PSP server is configured to transmit, in response to the payment authorization response, a payment request for capture command to the consumer PSP server via the payment platform; and the consumer PSP server being further configured to respond to the payment request for capture by confirming that the payment will proceed.

According to one embodiment, the consumer PSP server configured to verify whether the payment can be accepted by verifying the payment period and/or the payment limit defined by the electronic consent token, and/or verifying that there are sufficient funds on the consumer's account.

According to one embodiment, the electronic consent token is cryptographically signed, and verifying by the consumer PSP server whether the payment can be accepted comprises verifying the signature of the electronic consent token, and refusing the payment if the signature is invalid.

According to one embodiment, the electronic consent token is stored in a memory of the payment platform.

According to one embodiment, a wallet application of the consumer device, or a remote wallet application accessible by the consumer device, is configured to cryptographically sign the electronic consent token using a private key of a public/private key pair, and the consumer PSP server is configured to verify the signature of the electronic consent token using the public key of the public/private key pair.

### Brief description of drawings

The foregoing features and advantages, as well as others, will be described in detail in the following description of specific embodiments given by way of illustration and not limitation with reference to the accompanying drawings, in which:
Figure 1 illustrates an account to account payment procedure, involving a payee device and a payer device, that has been proposed according to the SEPA Request to Pay Scheme;
Figure 2A illustrates an E/M Commerce account to account payment transaction initiated by the payer through the payee involving an acceptor device and a consumer device according to an example embodiment of the present disclosure;
Figure 2B illustrates a merchant-initiated account to account payment transaction, applicable to both electronic or mobile (E/M) Commerce and PoS (point of sale) payments, involving an acceptor device and a consumer payment service provider according to an example embodiment of the present disclosure;
Figure 2C illustrates a PoS-payment transaction initiated by the payer through the payee involving an acceptor device and a consumer device according to yet a further example embodiment of the present disclosure;
Figure 3 schematically illustrates a consumer device of Figures 2A to 2C in more detail according to an example embodiment of the present disclosure;
Figure 4 illustrates an example of a server implementing a payment platform of Figures 2A to 2C according to an example embodiment of the present disclosure;
Figure 5 is a flow diagram illustrating operations in a payment method involving a consent token according to an example embodiment of the present disclosure; and
Figure 6 is a flow diagram illustrating operations in a payment method involving two-step payment execution according to an example embodiment of the present disclosure.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, algorithms and circuits for implementing asymmetric cryptography have not been detailed, those skilled in the art knowing how such algorithms and circuits can be realized.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

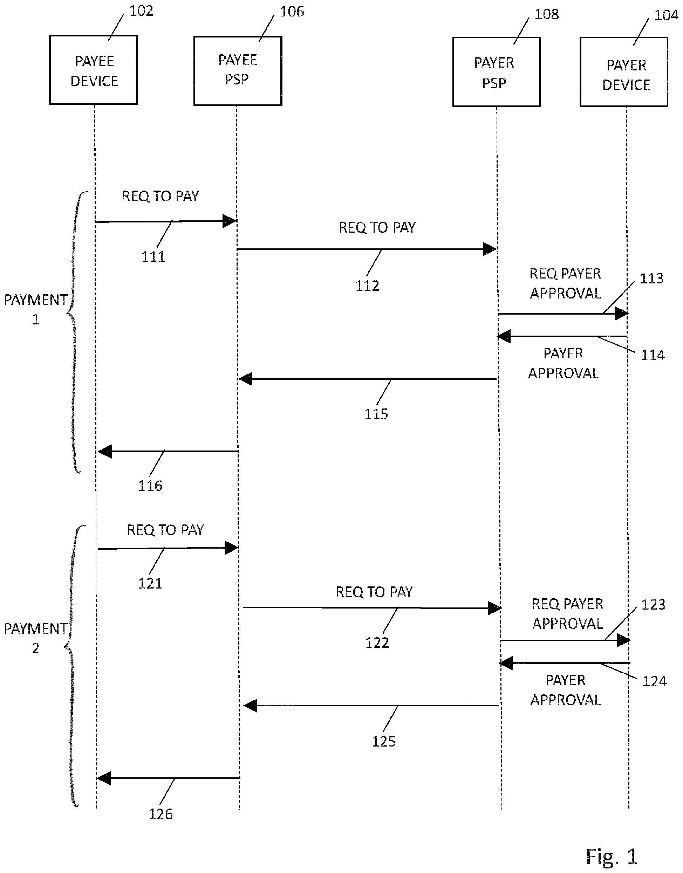

Figure 1 illustrates a non-card payment procedure, involving a payee device 102 (PAYEE DEVICE) and a payer device 104 (PAYER DEVICE) 104, based on the SRTP protocol.

Non-card payments will also be referred to herein as account to account payments or transfers, and imply that the payment is made from the payer bank account to the payee bank account (in some cases via an intermediate recipient, sometimes known as a "payment facilitator") based on the account information of the payer and payee accounts, without relying on any clearing process like in the case of a card payment.

The payee device 102 is for example configured to communicate with a payee SRTP provider, which for simplification reasons is represented by the payee PSP (PAYEE PSP) 106, for example via one or more wireless and/or wired networks. The payee PSP 106 is for example implemented by a server, for example associated with the payee's bank.

The payer device 104 is for example configured to communicate with a payer SRTP provider, which for simplification reasons is represented by the payer PSP (PAYER PSP) 108, for example via one or more wireless and/or wired networks. The payer PSP 108 is for example implemented by a server, for example associated with the payer's bank.

Figure 1 illustrates an example of a first payment transaction PAYMENT 1 between the payee and the payer. The payee device 102 is configured to generate a request to pay message REQ TO PAY, which is sent to the payee PSP 106 in a transmission 111. This message for example indicates the transaction details, including for example the amount to be paid, and identifies the payer using a payer identifier. For example, the payer identifier could be the account details of the payer, such as an IBAN (International Bank Account Number) or the like, or another type of identifier.

The payee PSP 106 processes the request, and sends it in a transmission 112 to the payer PSP 108.

The payer PSP 108 for example identifies the payer contact details based on the payer identifier, and transmits to the payer device 104, in a transmission 113, a request payer approval message REQ PAYER APPROVAL. This message for example includes at least the transaction details, and may also include the identifier of the payee. The payer is for example prompted to provide a response to the approval request, and if the payer authorizes the transaction, a payer approval message PAYER APPROVAL is for example transmitted in transmissions 114 and 115 back to the payee PSP 106 and finally, in a message 116, to the payee 102.

While outside of the scope of the SRTP scheme, in a typical implementation, the payer PSP 108 responds by initiating the settlement of the underlying payment towards the payee PSP 106.

Figure 1 also illustrates an example of second payee-initiated payment transaction PAYMENT 2 between the payee and the payer. The transaction is for example implemented in the same manner as the payment transaction PAYMENT 1, by a series of message transmissions 121 to 126, which are similar to the message transmissions 111 to 116 respectively, and will not be described again in detail.

The first and second payment transactions PAYMENT 1 and PAYMENT 2 may be separated by a few second, hours, days or months, but involve the same payee and payer, and result in a relatively high burden on the payment network infrastructure, in particular the PSPs 106, 108, in terms of energy consumption and processing resources. A further drawback of the solution of Figure 1 is that, once a payment request has been transmitted by the payee device 102, the payment situation is undetermined until the payment confirmation has been received. In case of delay or a communication error between the payee device 102 and the payer device 104, the confirmation may be received late or not at all, causing the payee device 102 to send a new request, which could risk a double payment. Yet a further drawback of the solution of Figure 1 is that it lacks versatility and cannot, for example, allow certain complex transaction types to be implemented.

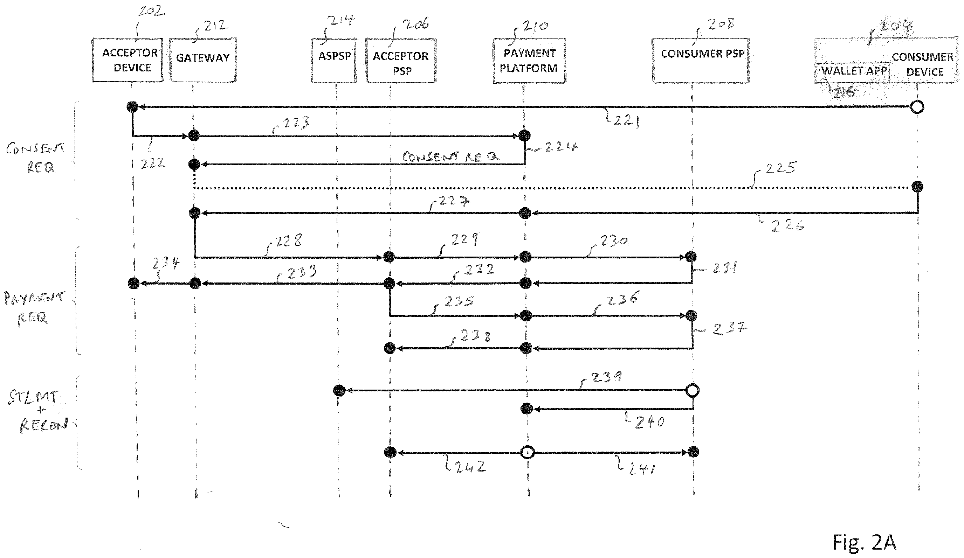

Figure 2A illustrates an account to account payment transaction initiated by the payer through the payee between an acceptor device 202 (ACCEPTOR DEVICE), which is a device of a party that is to receive a payment, and a consumer device 204 (CONSUMER DEVICE), which is a device of a party that is to make a payment, according to an example embodiment of the present disclosure.

The acceptor device 202 is for example a merchant device, such as a device at a point of sale. In some embodiments, the acceptor device 202 is a mobile device, such as a smartphone, tablet computer, or laptop computer, capable of wireless communications using a cellular network or the like. Alternatively, the acceptor device 202 could be a PC (Personal Computer) or desktop computer connected for example to a communications network and having access to the internet.

The consumer device 204 is for example a customer device. In some embodiments, the consumer device 204 is a mobile device, such as a smartphone, tablet computer, or laptop computer, capable of wireless communications using a cellular network or the like. Alternatively, the consumer device 204 could be a PC (Personal Computer) or desktop computer connected for example to a communications network and having access to the internet.

The transaction of Figure 2A is for example an electronic commerce (E-Commerce) transaction or a mobile commerce (M-Commerce) transaction. For example, in in the case of an E-Commerce transaction, the consumer device 204 is a computer such as a laptop or tablet computer (but which may be implemented by the consumers mobile device for certain parts of the transaction, such as user consent), and in the case of an M-Commerce transaction, the consumer device 204 is a mobile device, such as a mobile telephone or smart phone. In either case, the acceptor device 202 is for example a computer or server hosting an online shop of the acceptor.

The acceptor device 202 is associated with an acceptor PSP 206 (ACCEPTOR PSP), and the consumer device 204 is associated with a consumer PSP 208 (CONSUMER PSP). The acceptor PSP 206 and consumer PSP 208 are each for example configured to communicate with a payment platform 210 (PAYMENT PLATFORM). The acceptor device 202 for example communicates with the acceptor PSP 206 via a gateway 212 (GATEWAY). In addition, if authorized by the acceptor PSP 206, the acceptor device 202 can communicate directly via gateway 212 with the payment platform 210. Furthermore, the acceptor PSP 206 for example plays the role of an Account Servicing Payment Service Provider (ASPSP), or this may be performed by a specific element ASPSP 214. The ASPSP is for example responsible for crediting a payment to the recipient of the instant credit transfer, which is for example the acceptor account. The gateway 212 represents the technical link between the acceptor and the acceptor PSP 206, and could, in alternative embodiments, be implemented as part of the acceptor device 202, the acceptor PSP 206 or a third party.

The consumer device 204 for example stores, in a memory of the device, a wallet application 216 (WALLET APP), which is a secure application capable of providing a secure environment for managing payment transactions. In the case that the consumer device 204 is a mobile communications device, the wallet application is a mobile application executed in a secure environment of the consumer device, such as in a trusted execution environment (TEE). In the case that the consumer device 204 is a computing device not having a secure environment, the wallet application 216 is for example a web application that is run on a remote server or backend server (not illustrated).

Figure 2A illustrates examples of signal transmissions between the various elements of the payment system. It will be understood by those skilled in the art that these transmissions can be performed by a direct transmission of the corresponding digital data over intermediate networks, or by a retrieval of the corresponding digital data as a download from a server or the like, any form of data transmission being covered by the described embodiments.

The account to account payment is for example executed in three phases, a first consent request phase (CONSENT REQ) and a subsequent payment request phase (PAYMENT REQ), which is for example a step-step payment, and finally there is also a settlement and reconciliation phase (STLMT+RECON), during which settlement occurs and/or reconciliation reports are generated.

The consent request phase for example involves the transmission 221, by the consumer device 204 to the acceptor device 202, of a message that triggers the transaction by the consumer. For example, the transmission 221 is generated when the consumer is visiting, using the consumer device 204, an online shop of the acceptor, and clicks to pay by an account to account transfer for the purchase of goods or services.

The acceptor device 202 for example responds to the transmission 221 by accessing the payment platform 210 via the gateway 212 in order to generate a consent request, as represented by a transmission 222 from the acceptor device 204 to the gateway 212 and a transmission 223 from the gateway 212 to the payment platform 210.

In response, a consent request is generated in the payment platform 210 (CONSENT REQ), which is transmitted to the gateway 212, for example along with a redirect link, as represented by a transmission 224. The consent request is for example an electronic message that identifies the acceptor, for example using an acceptor identifier, which may be an account number such as an IBAN or the like, or an account number alias or another identifier of the acceptor. The consent request also for example indicates a payment plan, specifying, for example, at least a payment amount and/or a payment period. The payment plan is for example versatile, and may indicate for example one of the following types of payments, among others:
- a one-off payment, the payment plan indicating the amount, to be paid, and whether the payment is to be made immediately or at a future date, and optionally a description of the products and/or services bought by the payment;
- a two-part payment, the payment plan for example indicating the amount of a deposit to be paid immediately, and the amount of a balance to be paid at a later date and optionally a description of the products and/or services bought by the payment;
- a recurring payment at regular intervals over a defined period, such as a monthly payment over 12 months, the payment plan indicating the payment intervals, e.g. weekly, monthly, the subscription duration, e.g. 3-month subscription, or 2-year subscription, and the payment amounts, and optionally a description of the products and/or services bought by the payment;
- a perpetual payment at regular intervals, the payment plan indicating the payment intervals, e.g. weekly or monthly, the payment amount, or a payment limit in the case the payment amount is variable, and optionally a description of the products and/or services bought by the payment.

As represented by a dashed line 225 in Figure 2A between the gateway 212 and the consumer device 204, the redirect link provided with the consent request is activated by the online shop of the acceptor 202 in order to redirect the consumer to the wallet application 216 stored on the consumer device 204. For example, the wallet application 216 is automatically opened on the consumer device 204.

The wallet application 216 is for example configured to display the payment plan on a display screen of the consumer device 204, and the consumer is prompted to consent to the payment plan using their device. In addition, the wallet application 216 is for example configured to authenticate the consumer using a strong authentication procedure. In some embodiments, this involves a biometric verification, such as a fingerprint or facial ID verification of the payer using the consumer device 204.

In response to the consumer approval, the wallet application 216 is for example configured to create a signed consent token. In the case of a mobile wallet application, the signed consent token is for example generated based on one or more locally stored cryptographic signing keys stored on the consumer device 204. In the case of a web wallet application, the signed consent token is for example generated by the remote/backend server, based on one or more cryptographic signing keys stored by the remote/backend server. For example, the signing is based on asymmetric cryptography using a public/private key pair. The private key is for example known only to a secure element of the consumer device 204. For example, the consumer device 204 or remote/backend server for example stores the private key in a secure memory of the secure element, and uses this private key to sign the consent token. The public key is for example supplied to the other entities, including for example the payment platform 210, the acceptor PSP 206 and the consumer PSP 208. This signature can thus be verified by the other entities using the public key.

For example, the consent token is an electronic data token generated for example by the wallet application 216 based on a rule set that is used to incorporate the information of the payment plan in the consent token. For example, the wallet application 216 implements a rules engine that is configured to generate the payment consent token based on the rule set. For example, the rule set define minimal information of the payment plan that should be included in the electronic consent token, such as a payment amount or payment limit, and a validity period of the token, which for example corresponds to the end of the payment period. In some embodiments, the electronic consent token comprises the consumer and acceptor account numbers, for example in the form of IBANs, or of the account number aliases.

The signed consent token is for example supplied to the payment platform 210 as represented by a transmission 226. The acceptor device 202 is then for example notified of the successfully given consent in a transmission 227 to the gateway 212, and the signed consent token is also for example transmitted to the gateway 212.

The payment platform 210 for example stores all consent tokens in a memory, allowing a consumer to request a centralized modification or revocation of an existing consent token, which will apply to any payment requests that have not yet been authorized based on the consent token. For example, the electronic wallet application 216 of the consumer device 204 also stores a copy of the payer consent tokens of the consumer, allowing the payer to view the payment consents that are active at a given time, and to request modifications or revocations of these consents by generating and transmitting electronic requests to the payment platform 210.

In some embodiments, the acceptor device 202 is also configured to store the consent token such that it is ready to be included in a payment request for authorization, as described below. In any case, for transactions in which the payment is decoupled in time from the moment the consent is given, such as in the case of a pre-authorization or a recurring payment, the Acceptor device 202 is for example configured to always request the most updated consent token to the payment platform 210 before initiating a payment request for authorization, since the consent may have been updated by the consumer.

During the payment execution phase, one or more payments are executed based on the consent token. These payments are authorized by the consumer PSP 208, and are executed based on the signed consent token, without again seeking approval from the consumer. Furthermore, each payment is executed according to a two-step approach comprising the payment request step PAYMENT REQ and the payment instruction step PAYMENT INST, as will now be described in more detail.

Figure 2A illustrates examples of one payment based on the consent token obtained during the consent phase.

A payment request is for example initiated by the gateway 212 as represented by a transmission 228 to the acceptor PSP 206 of a payment request for authorization, which aims to get a guarantee of the payment from the Consumer PSP 208. This payment request for authorization for example indicates at least the payment amount, and is for example accompanied by the signed consent token.

As represented by a transmission 229 from the acceptor PSP 206 to the payment platform 210, the acceptor PSP 206 for example forwards the payment request for authorization to the payment platform 210. The payment platform 210 is for example configured to verify the signature of the consent token and to check whether the payment that is requested is compatible with the payment rules contained within the consent token.

Verifying the signature for example involves decoding the consent token 210, and decrypting the signature using the public key of the payment platform, and verifying that the decrypted signature corresponds to the payload of the token. If the signature is invalid, the transaction is for example refused, and an electronic message is for example transmitted to the acceptor PSP 206 informing it.

Checking whether the payment is compatible with the payment rules for example involves verifying that the payment amount does not exceed the amount or limit defined in the consent token. Additionally or alternatively, the payment period is verified to ensure that the payment period or token expiry date defined by the consent token has not expired. In some embodiments, the payment platform 210 is also configured to generate a fraud score, indicating the risk that the payment request is fraudulent, and to verify whether the fraud score exceeds an acceptable limit. If any of these verifications fails, the payment is for example refused, and an electronic message is for example transmitted to the acceptor PSP 206 informing it.

If the payment platform 210 finds the requested payment to be compatible with the payment rules of the consent token, and if verified, that the fraud score does not exceed the acceptable limit, the payment platform 210 is for example configured to forward the payment request for authorization to the consumer PSP 208 in a transmission 230. The payment request for authorization for example indicates at least the payment amount, and is for example accompanied by the signed consent token.

The consumer PSP 208 is for example configured to perform a payment authorization procedure to determine whether or not the payment should be authorized. Like the payment platform 210, the consumer PSP 208 is for example configured to verify the signature of the consent token, and to check whether the payment that is requested is compatible with the payment rules contained within the consent token. For example, the consumer PSP 208 verifies at least that a validity period of the consent token has not expired. Additionally, the consumer PSP 208 may verify that a payment limit defined by the payment rules has not been exceeded. In some embodiments, the payment platform 210 is also configured to generate a fraud score. The consumer PSP 208 also for example verifies the availability of sufficient funds in the consumer account.

Assuming that the consumer PSP 208 is able to authorize the payment, which implies the guarantee of the payment from the Consumer PSP 208, it for example responds with a payment authorization response, as represented by a transmission 231, which is for example communicated to the payment platform 210, and then forwarded by the payment platform 210 to the acceptor PSP 206.

The payment acceptor PSP 206 is for example configured to notify the acceptor device 202, via the gateway 212, of the success of the payment, as represented by transmissions 233 and 234 in Figure 2A. This notification for example informs the acceptor that the payment has been approved and will proceed once the execution command is sent, and therefore the acceptor can act accordingly, for example by releasing goods to the payer, or by renewing a license or subscription. Furthermore, the acceptor PSP 206 is for example configured to initiate a payment request for capture, and to send this request to the payment platform 210, as represented by a transmission 235 in Figure 2A. This payment request for capture for example requests execution of the payment, and includes the amount of the payment. Furthermore, the payment request for capture for example includes the consent token, such that this payment request for capture can be linked to the payment authorization response.

The payment platform 210 is for example configured to forward the payment request for capture to the consumer PSP 208, as represented by a transmission 236. Since the consent token and payment details have already been verified, and the payment authorization response was positive, the payment request for capture is successful. Thus, the consumer PSP 208 for example returns a capture confirmation message to the payment platform 210, as represented by a transmission 237, and the payment platform 210 for example forwards this message to the acceptor PSP 206, as represented by a transmission 238, such that the acceptor PSP 206 is able to record the successful confirmation of the payment request for capture, which implies that the payment will be or has been settled by the Consumer PSP 208.

In some embodiments, settlements are triggered asynchronous by the payment request for capture, and thus, as represented by a transmission 239, the consumer PSP 208 for example triggers the settlement in relation with the payment request for capture received with transmission 236. This settlement is performed from the consumer PSP to the ASPSP 214. The ASPSP 214 is for example configured to credit the acceptor PSP with the received settlement. Furthermore, as represented by a transmission 240, the payment platform 210 is for example notified regarding the result of the settlement. In some embodiments, the settlement is made by an SCT Inst operation. It will be noted that, in the example of Figure 2A, the settlement of the payment is not performed by the acceptor PSP 206, but by the ASPSP 214. In alternative embodiments, the settlement of the payment is performed by the acceptor PSP206. Furthermore, the recipient of the funds is not always the acceptor itself (e.g. the merchant), but could be also the acceptor PSP 206 or a collecting PSP, sometimes referred to as a "Payment Facilitator". In any case, the recipient of the funds, if it is not the acceptor itself, is for example configured to credit the account of the acceptor.

In some embodiments, the payment platform 210 is configured to provide periodic reports, such as daily reports, on transaction statuses and settlements to the consumer PSP 208 and/or to the acceptor PSP 206, as represented by transmissions 241 and 242. This allows the PSP 206 and/or 208 to verify the transaction statuses as held by the payment platform 210. These reports are based on the settlement result reported for each payment by the consumer PSP 208 to the payment platform 210, as represented in transmission 240.

While not illustrated in Figure 2A, according to the embodiments described herein, multiple payments can be executed based on a same consent token, without seeking further approval from the consumer. Furthermore, the two-step payment execution removes some ambiguity as to the result of a payment request. Indeed, if the acceptor device 202 or gateway 212 receives no response following the initiation of a payment request as represented by the transmission 228, this payment request can be repeated without risking a double payment, as this request only triggers a verification that the payment can proceed and can be guaranteed by the consumer PSP 208. Furthermore, the gateway 212 will only emit the payment request for capture, as represented by the transmission 235, once in response to the payment authorization response message, implying that there is an active communication link between the gateway 212 and the consumer PSP 208, via the payment platform 210.

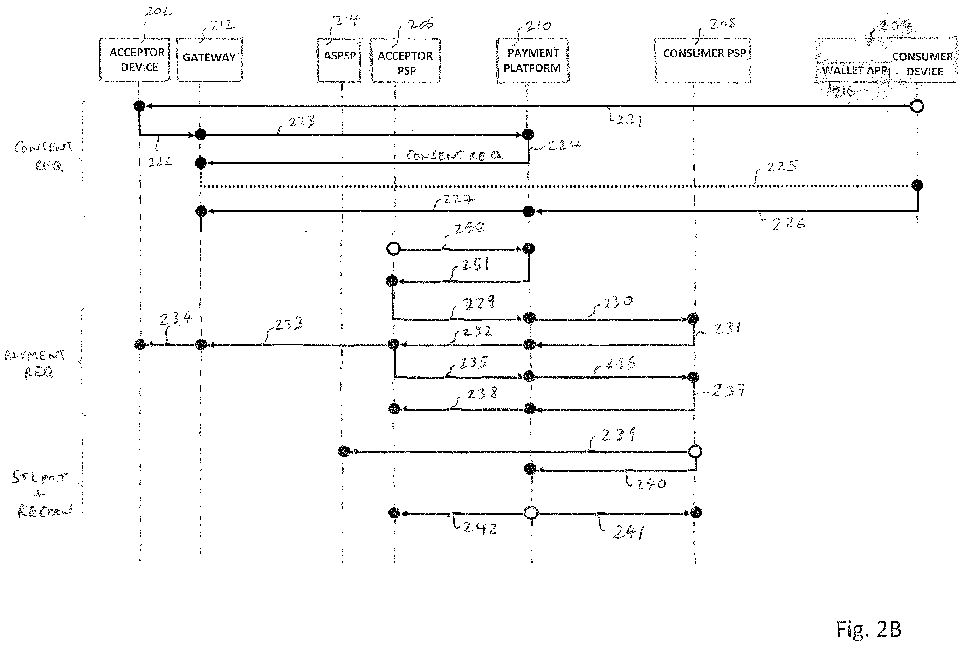

Figure 2B illustrates a merchant-initiated account to account payment transaction involving, for example, the same elements as the transaction of Figure 2A. For example, a consent token is for example obtained as described above based on the operations 221 to 227corresponding to a consent request phase CONSENT REQ as described in relation with Figure 2A. This consent request phase will not be described again in detail. The consent token for example permits one or more future payments, which can be triggered directly by the merchant's bank.

In some embodiments, the merchant-initiated account to account payment transaction starts by the acceptor PSP 206 retrieving the consent token currently held by the payment platform 210, as represented by a transmission 250. For example, this consent token may have been updated by the consumer via the consumer device 204 since its first creation, and the acceptor PSP 206 may not have the updated version. The transmission 250 for example corresponds to an electronic message requesting the consent token, which may be performed via a web interface. As represented by a transmission 251, the payment platform 210 for example responds by providing the current consent token that it holds.

Alternatively, if the acceptor PSP 206 already has a valid consent token, the payment request is for example triggered directly by the acceptor PSP 206 based on this consent token. If, however, the payment platform 210 determines that the consent token is out of date, for example because it has been updated by the consumer, the payment platform 210 for example rejects the payment request for authorization, and informs the acceptor PSP 206 accordingly. The acceptor PSP 206 then for example retrieves the updated consent token as described above.

Once the acceptor PSP 206 has the up-to-date consent token, the same process is for example used to execute the transaction as described in relation with Figure 2A, involving some or all of the transmissions 229 to 242, which will not be described again in detail.

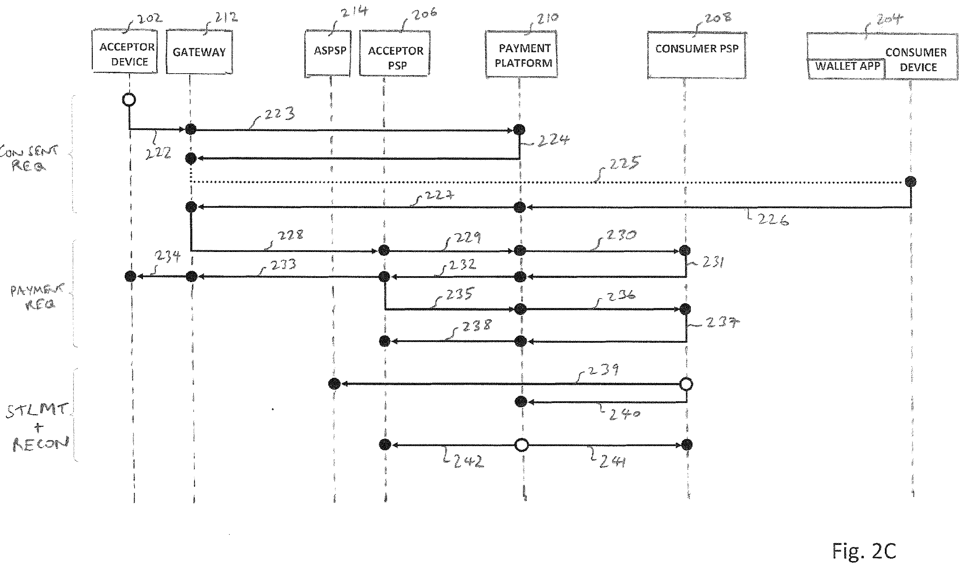

Figure 2C illustrates a PoS (point of sale)- account to account payment transaction initiated by the payer through the payee involving, for example, the same elements as the transaction of Figure 2A. For example, in this example the acceptor device 202 is a PoS device, for example at the checkout of a retail store or other premises selling goods and/or services. The PoS device could alternatively be a vending machine or the like.

In the example of Figure 2C, rather than being initiated by the transmission 221 of Figure 2A, the consent request phase is for example initiated by the acceptor device 202 directly requesting the generation of a consent request, as represented by the transmission 222 from the acceptor device 204 to the gateway 212 and a transmission 223 from the gateway 212 to the payment platform 210. The same process as described in relation with Figure 2A is then for example used to sign the consent and then execute the transaction, involving some or all of the transmissions 224 to 242, which will not be described again in detail. However, in this case, the redirect link is for example provided to the consumer device 204 as a QR code or the like, and by following the redirect link the consumer device 204 is for example redirected to the wallet application 216 stored on the consumer device 204, in a similar fashion to what is described in relation with Figure 2A.

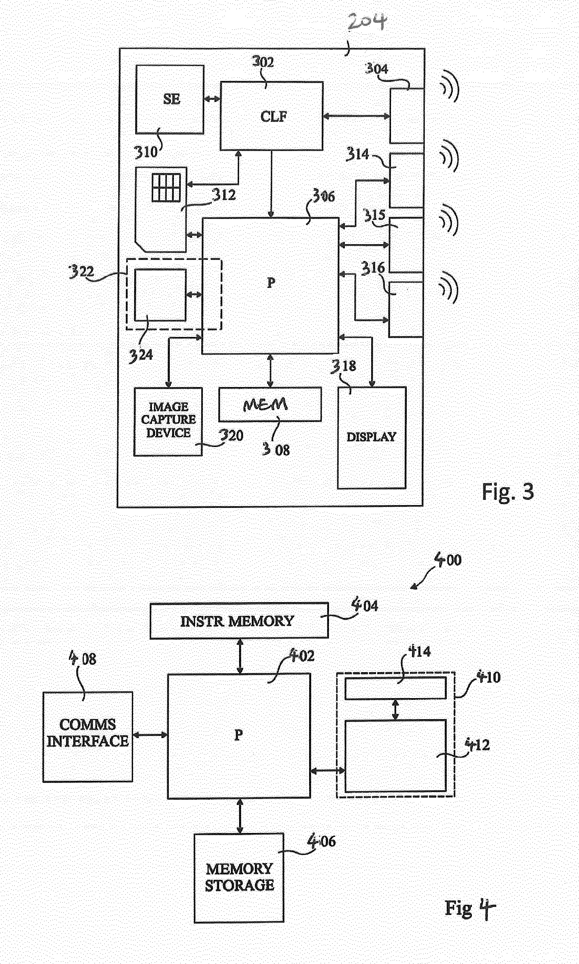

Figure 3 schematically illustrates the consumer device 204 of Figures 2A to 2C in more detail according to an example in which it is a mobile device.

As illustrated in Figure 3, the mobile device 204 is for example capable of wireless communications. For example, the device 204 comprises a contactless front-end integrated circuit (CLF) 302, which will be referred to herein as an NFC router. The NFC router 302 is coupled to an NFC antenna 304, and together the router 302 and antenna 304 provide NFC circuitry for emulating the behavior of an NFC transponder. The NFC router 302 is also for example coupled to a host processing device (P) 306 of the mobile device 102.

The processing device 306 for example comprises one or more processors under control of instructions stored in a memory (MEM) 308. The memory 308 also for example stores one or more applications of the mobile device 204, including for example the payment wallet application 216.

The NFC router 302 is also for example coupled to a secure element (SE) 310, which is for example an embedded SE (eSE), and/or to a SIM or universal SIM circuit 312.

The processing device 306 is also for example coupled to: an antenna 314 permitting telecommunications within a cellular network; to an antenna 315 permitting WiFi (Wireless Fidelity) communications; and/or to an antenna 316 permitting ultra-wideband (UWB) RF communications. In some embodiments, the mobile device 102 may comprise only one or some of the antennas 314, 315 and 316. The mobile device 102 further comprises a display (DISPLAY) 318 coupled to the processing device 306, the display for example being a touch screen providing a user interface of the mobile device.

The mobile device 204 also for example comprises an image capture device (IMAGE CAPTURE DEVICE) 320, comprising an image sensor for capturing digital images. For example, the image capture device 320 is capable of capturing machine-readable codes such as QR-codes, and the mobile device 302 stores a suitable software application for interpreting the machine-readable code. Furthermore, in some embodiments, the image capture device 320 or a separate image sensor is capable of capturing biometric samples such as a finger print, facial image, finger vein or retina scan.

In some embodiments, the mobile device 204 comprises a trusted execution environment (TEE) 322 that for example comprises a memory device 324 storing one or more software applications and an allocation of the processing resources of the processing device 306 for execution of the software applications in isolation from the execution of other software applications stored in the instruction memory. For example, the trusted executed environment 322 is used for the execution of sensitive software applications, such as the mobile wallet application 216 and/or an application for PIN (personal identification number) entry and/or for capturing a biometric sample. Additionally or alternatively, the trusted executed environment 322 is for example used for cryptographic operations described herein, such as the generation of a public/private key pair, and the generation of a signature of a consent token using the private key. The trusted executed environment 322 also for example contains secure storage for securing storing the private key, such that it is never loaded into system memory of the device 204.

As will be described in more detail below, the mobile device 204 is for example a connected mobile device, having some or all of the following characteristics:
- portable, with no need to be permanently connected to any kind of cable, including a power supply cable or data cable;
- capable of implementing authentication, for example based on one or more of: a user biometric measurement, for example an image of the user's face or fingerprint; and a user secret, for example a PIN (personal identification number) or Password;
- capable of displaying payment plan data; and
- capable of registering a user acceptance or consent for the payment plan.

Figure 4 illustrates an example of a server 400 implementing the payment platform 210 of Figures 2A to 2C according to an example embodiment of the present disclosure. The acceptor PSP 206 and consumer PSP 208 are for example implemented by similar servers.

The server 400 for example comprises a processing device 402, which may comprise one or more processors, under the control of instructions stored in an instruction memory 404. A memory storage device 406 is also coupled to the processing device 402, and for example stores consent tokens. Each consent token defines at least some parameters of a payment between a corresponding payee and a corresponding payer, and thus the server 400 is for example capable of facilitating payments between many payers and many payees. The processing device 402 is also coupled to a communication interface 408, which permits communications, via a wired and/or wireless network, with the acceptor device 202, for example via the acceptor PSP 206, and with the consumer device 204, for example via the consumer PSP 208. The server 400 is for example capable of processing requests from a payer device or payee device to modify or revoke a consent token.

In some embodiments, the server 400 comprises a secure processing environment 410, which for example comprises a secure microprocessor 412, under the control of an instruction memory 414, storing one or more software applications that can be executed in isolation from the execution of other software applications stored in the instruction memory 404.

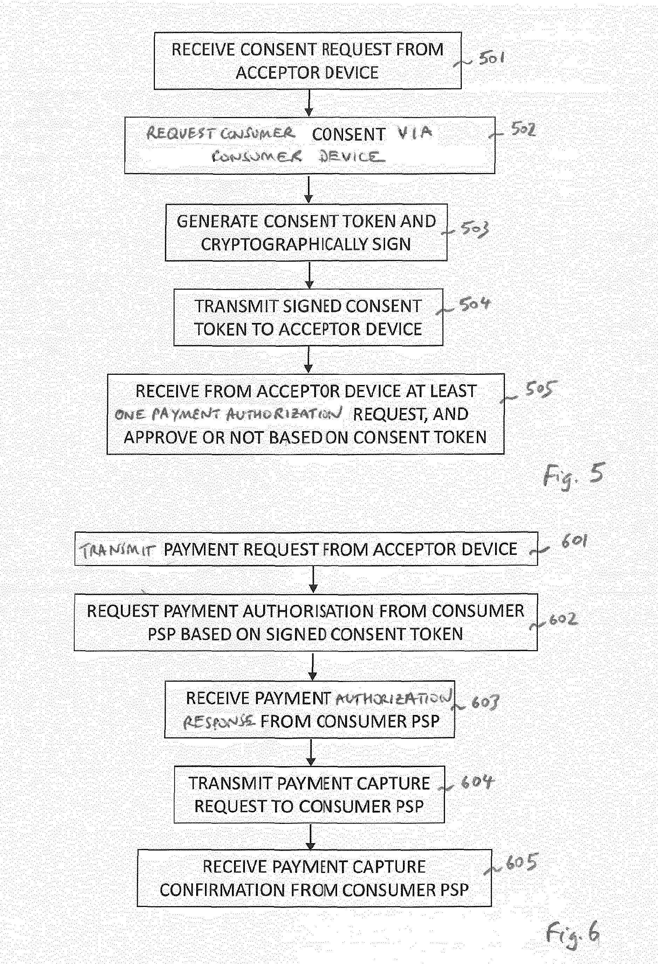

Figure 5 is a flow diagram illustrating operations in a payment method involving a consent token according to an example embodiment of the present disclosure. The method of Figure 5 is for example implemented by a payment system, corresponding for example to the payment platform 210, acceptor device 202, acceptor PSP 206, consumer PSP 208 and consumer device 204 of Figures 2A to 2C. In particular, the method is for example implemented in software, for example by a processing device of each element of the payment system under the control of instructions stored in instruction memories of each of the elements of the payment system.

In an operation 501, a consent request is for example received from the acceptor device 202 for one or more payments, based for example on a payment plan.

In an operation 502 after the operation 501, the consumer consent is requested from the consumer via the consumer device 204. This step for example comprises authenticating the consumer such that it is confirmed that it is the consumer who has consented to the payment plan.

In an operation 503 after the operation 502, a consent token is generated, for example, by a wallet application executed on the consumer device or by a web wallet application accessible by the consumer device, the consent token being based on the payment plan accepted by the payer, and the consent token is cryptographically signed.

In an operation 504 after the operation 503, the signed consent token is for example transmitted to the acceptor device 202 via the payment platform 210.

In an operation 505 after the operation 504, at least one account to account payment request for authorization is received as part of a payment transaction from the acceptor PSP 206, and approved by the consumer PSP 208 based on the consent token. In some embodiments, the payment transaction is a two-step transaction as described in Figure 6, comprising a payment request for authorization to have the guarantee of the payment, and then a Payment Request for Capture.

Figure 6 is a flow diagram illustrating operations in a payment method involving a payee-initiated payment request and a two-step payment execution according to an example embodiment of the present disclosure. Like the method of Figure 5, the method of Figure 6 is for example implemented by a payment system, corresponding for example to the payment platform 210, acceptor device 202, acceptor PSP 206, consumer PSP 208 and consumer device 204 of Figures 2A to 2C. In particular, the method is for example implemented in software, for example by a processing device of each element of the payment system under the control of instructions stored in instruction memories of each of the elements of the payment system.

In an operation 601, a payment request is transmitted by the acceptor device 202 to the payment platform 210, the payment request comprising the payment amount and the consent token defining a payment period and/or payment limit. For example, before operation 601, a consent request has for example been initiated by the acceptor side and authorization has been granted by the consumer side, such that a consent token can be generated.

In an operation 602 after the operation 601, the payment platform 210 is configured to inform the consumer PSP 208 of the payment request for authorization, for example based on the signed consent token and the payment amount.

In an operation 603 after the operation 602, the consumer PSP 208 for example makes a number of verifications, including verifying the consent token, verifying whether the payment request is permitted based on the conditions defined in the consent token, and performing some checks on the consumer side, such as verifying whether the IBAN is active; and/or verifying that there are sufficient funds in the consumer account. If any of these verifications indicate that the payment should be refused, an electronic message is for example transmitted to the payment platform 210 indicating the refusal. For example, the payment is refused if the signature of the electronic consent token is invalid, and/or if a payment limit and/or payment period defined by the electronic consent token are exceeded. Assuming that the verifications are passed with success, the consumer PSP 208 for example stores an indication that the payment associated with the transaction identifier can be guaranteed, and the payment platform 210 for example receives a payment authorization response message from the consumer PSP 208.

In an operation 604 after the operation 603, a payment request for capture is for example transmitted to the consumer PSP 208, the payment request for capture comprising the consent token. The consumer PSP 208 is for example configured to verify, based on the consent token, that the payment has been guaranteed, and if so, to execute the payment. The payment platform 210 and/or acceptor PSP 206 receives from the consumer PSP 208 a capture confirmation message confirming that the payment is being executed.

An advantage of the payment solution described herein based on a consent token is that it reduces the number of messages that are transmitted to the consumer device 204, thereby reducing the burden on the payment network infrastructure in terms of energy consumption and processing resources. In particular, the consumer is asked to perform a single consent operation, and multiple payment transactions can then be executed without needing to seek further authorization from the consumer. Indeed, the consent token provides a secure and effective manner for verifying that the required consumer consent exists. In contrast, according to the SRTP scheme, the payer has to confirm the request to pay associated with each single payment. Furthermore, the use of a consent token permits a decentralized approach, as the consent token can be verified by any entity in the chain, without relying on a token service provider.

An advantage of the two-step payment execution approach as described herein is that it provides a technical solution that addresses the technical problem of ambiguity in the payment status between the time that an acceptor device initiates a payment request and the moment a payment confirmation is received. In particular, the two-step approach permits a verification of the payment conditions prior to the payment execution, and because the payee PSP sends the payment execution command after receiving confirmation that the payment will be authorized (the payment authorization response message), there is certainty that the payment execution command will result in the payment being made.

Various embodiments and variants have been described. Those skilled in the art will understand that certain features of these embodiments can be combined and other variants will readily occur to those skilled in the art. In particular, while examples of SRTP payments have been described, it will be apparent to those skilled in the art that the payment solutions described herein are not limited to SCT payments.

Finally, the practical implementation of the embodiments and variants described herein is within the capabilities of those skilled in the art based on the functional description provided hereinabove.

## Claims

1. A method for performing an account to account payment transaction, the method comprising:
- receiving, by a payment platform (210) from an acceptor device (202), a consent request for one or more payments, the consent request indicating at least a payment amount and/or a payment period;
- requesting, via a consumer device (204), consumer consent for the one or more payments;
- in response to consumer consent, generating, by the consumer device an electronic consent token indicating at least the payment amount and/or the payment period, the electronic consent token being cryptographically signed, and transmitting the electronic consent token to the acceptor device (202) via the payment platform (210);
- initiating one or more account to account payments, by the acceptor device (202) or by an acceptor payment service provider (PSP) server (206), by transmitting a payment request for authorization to a consumer PSP server (208) via the payment platform (210), the payment request for authorization comprising the consent token; and
- authorizing or not, by the consumer PSP server (208), the payment request for authorization based on the payment amount and/or the payment period indicated by the consent token.

2. The method of claim 1, wherein the consumer PSP server (208) is configured to authorize or not the payment based on:
- a comparison of the payment amount of the payment request with the payment amount indicated by the consent token; and/or
- a verification of whether the payment period has expired; and/or
- a verification of whether the payment can proceed, for example in view of the available funds on the consumer's account.

3. The method of claim 1 or 2, wherein the electronic consent token is stored in a memory of the payment platform (210).

4. The method of any of claims 1 to 3, wherein a wallet application of the consumer device (204), or a remote wallet application accessible by the consumer device (204), is configured to cryptographically sign the electronic consent token using a private key of a public/private key pair, and wherein the consumer PSP server (208) is configured to verify the signature of the electronic consent token using the public key of the public/private key pair.

5. The method of any of claims 1 to 4, wherein each of the one or more account to account payments is executed using a two-step method, a first step comprising obtaining, by the acceptor PSP server (206) from the consumer PSP server (208), a payment authorization response message, which implies a guarantee of the payment from the consumer PSP server (208), and a second step comprising transmitting, by the acceptor PSP server (206) to the consumer PSP server (208), in response to the reception of the payment authorization response message, a payment request for capture command, requiring the execution of the payment.

6. The method of any of claims 1 to 5, further comprising, requesting the consumer consent for the one or more payments and prior to generating the electronic consent token, authenticating the consumer via the consumer device (204) .

7. A payment system for performing an account to account payment transaction, the payment system comprising:
- a payment platform (210) configured to receive, from an acceptor device (202), a consent request for one or more payments, the consent request indicating at least a payment amount and/or a payment period;
- a consumer device (204) configured to obtain consumer consent for the one or more payments, and in response to the consumer consent, to generate an electronic consent token indicating at least the payment amount and/or the payment period, the electronic consent token being cryptographically signed, the consumer device (204) being further configured to transmit the electronic consent token to the acceptor device (202) directly or via the payment platform (210); and
- wherein the acceptor device (202), or an acceptor payment service provider (PSP) server (206) of the payment system, is further configured to initiate one or more account to account payments, by: transmitting by the acceptor payment service provider (PSP) server (206) to the payment platform (210), a payment request for authorization comprising a payment amount and the electronic consent token defining the payment period and/or a payment limit approved by a payer; and transmitting a payment request to a consumer PSP server (208), the payment request comprising the consent token, wherein the consumer PSP server (208) is configured to authorize or not the payment request based on the payment amount and/or the payment period indicated by the consent token.

8. The payment system of claim 7, wherein the consumer PSP server (208) is configured to authorize or not the payment based on:
- a comparison of the payment amount of the payment request with the payment amount indicated by the consent token; and/or
- a verification of whether the payment period has expired; and/or
- a verification of whether the payment can proceed, for example in view of the available funds on the consumer's account.

9. The payment system of claim 7 or 8, wherein the payment platform (210) comprises a memory storing the electronic consent token.

10. The payment system of any of claims 7 to 9, wherein a wallet application of the consumer device (204), or a remote wallet application accessible by the consumer device (204), is configured to cryptographically sign the electronic consent token using a private key of a public/private key pair, and wherein the consumer PSP server (208) is configured to verify the signature of the electronic consent token using the public key of the public/private key pair.

11. The payment system of any of claims 7 to 10, wherein each of the one or more account to account payments is executed using a two-step method, a first step comprising obtaining, by the acceptor PSP server (206) from the consumer PSP server (208), a payment authorization response message, which implies a guarantee of the payment from the consumer PSP server (208), and a second step comprising transmitting, by the acceptor PSP server (206) to the consumer PSP server (208), in response to the reception of the payment authorization response message, a payment request for capture command, requiring the execution of the payment.

12. The payment system of any of claims 7 to 11, wherein the consumer device (204) is further configured to authenticate the consumer after requesting the consumer consent for the one or more payments and prior to generating the electronic consent token.
